(19) Europäisches Patentamt

European Patent Office

Office européen des brevets

(11) **EP 0 927 342 B1**

(12) **EUROPÄISCHE PATENTSCHRIFT**

(45) Veröffentlichungstag und Bekanntmachung des Hinweises auf die Patenterteilung:
**21.11.2001 Patentblatt 2001/47**

(21) Anmeldenummer: **97937539.1**

(22) Anmeldetag: **01.08.1997**

(51) Int Cl.⁷: **G01J 9/02**, G01B 9/02

(86) Internationale Anmeldenummer:
**PCT/EP97/04189**

(87) Internationale Veröffentlichungsnummer:
**WO 98/05933 (12.02.1998 Gazette 1998/06)**

(54) **INTERFEROMETER SOWIE VERFAHREN ZUR KOMPENSATION DER DISPERSION BZW. ZUR ERHÖHUNG DER SPEKTRALEN AUFLÖSUNG EINES DERARTIGEN INTERFEROMETERS**

INTERFEROMETER AND METHOD FOR COMPENSATION OF DISPERSION OR INCREASE IN SPECTRAL RESOLUTION OF SUCH AN INTERFEROMETER

INTERFEROMETRE ET PROCEDE POUR LA COMPENSATION DE LA DISPERSION OU POUR L'AUGMENTATION DE LA RESOLUTION SPECTRALE D'UN TEL INTERFEROMETRE

(84) Benannte Vertragsstaaten:
**AT BE CH DE DK ES FI FR GB GR IE IT LI LU MC NL PT SE**

(30) Priorität: **05.08.1996 DE 19631642**
**17.07.1997 DE 19730572**

(43) Veröffentlichungstag der Anmeldung:
**07.07.1999 Patentblatt 1999/27**

(73) Patentinhaber: **Deutsche Telekom AG**
**53113 Bonn (DE)**

(72) Erfinder:
- **DULTZ, Wolfgang**
  **D-65936 Frankfurt (DE)**
- **FRINS, Erna**
  **11600 Montevideo (UY)**
- **HILS, Bernd**
  **D-61462 Königstein (DE)**
- **SCHMITZER, Heidrun**
  **D-93051 Regensburg (DE)**

(56) Entgegenhaltungen:
DE-A- 4 418 213    US-A- 5 379 115

**Beschreibung**

Die Erfindung betrifft ein Interferometer gemäß dem Oberbegriff des Anspruchs 1 sowie ein Verfahren zur Kompensation der Dispersion und ein Verfahren zur Erhöhung des spektralen Auflösung eines derartigen Interferometers nach den Ansprüchen 12 und 13.

Das einem Interferometer für elektromagnetische Strahlung zugrundeliegende Meßprinzip ist die Interferenz zweier kohärenter elektromagnetischer Teilwellen $\Psi_1$ und $\Psi_2$, die in einer definierten Phasenbeziehung zueinander stehen, d.h. die gleiche Wellenlänge $\lambda$ haben und mit einer festen, zeitlich konstanten Phasendifferenz $\Delta\varphi$ überlagert werden. Detektiert wird die Intensität $I_{det}$ der überlagerten Welle. $I_{det}$ ist proportional zu $a+\cos(\Delta\varphi)$, wobei a eine Konstante ist. Es interferieren stets nur gleiche Polariationskomponenten, z.B. elektrische Feldvektoren in x-Richtung, miteinander.

Bei einem Zweistrahlinterferometer wird die Strahlung einer Strahlungsquelle in zwei Teilstrahlen mit der relativen Phasendifferenz Null aufgeteilt und in jeweils einen Interferometerarm eingespeist. Die Interferometerarme können unterschiedliche optische Weglängen haben, so daß die Teilwellen nach Durchlaufen des Interferometers mit einer Phasendifferenz ungleich Null überlagert werden. Bei einem Zweistrahlinterferometer mit einer optischen Weglängendifferenz $\Delta\ln$ zwischen den beiden Interferometerarmen beträgt die Phasendifferenz zwischen den Teilwellen $\Delta\varphi = 2\pi\frac{\Delta\ln}{\lambda}$. 1 ist die tatsächliche Weglänge, n der Brechungsindex des Mediums. Diese Interferometerphase $\Delta\varphi$ ist abhängig von der Wellenlänge $\lambda$ und von $\Delta\ln$ und kann daher verwendet werden, um bei Kenntnis der einen Größe die jeweils andere genau auszumessen.

Interferometer werden beispielsweise zur Längenbestimmung, z.B. von Endmaßen, zur Brechzahlmessung oder zur Spektroskopie eingesetzt.

Längenmessungen, bzw. Bestimmungen der Änderung der optischen Weglängendifferenz $\Delta\ln$ werden durch Wellenlängenschwankungen verfälscht, da Änderung der Wellenlänge auch ohne Änderung von $\Delta\ln$ eine Änderung des Interferometerausgangssignals $I_{det}$ bewirkt. Zur Behebung dieses Nachteils ist von Y. Troitski, Applied Optics 34 44717 (1995) ein dispersionsloses Interferometer vorgeschlagen, bei welchem die Wellenlängenabhängigkeit des Ausgangssignals durch Bedampfung der Interferometerspiegel nahezu kompensiert wird. Nachteilig daran ist, daß dieses Verfahren durch die Spiegelbedampfung aufwendig und unflexibel ist. Der Arbeitsbereich des Interferometers, d.h. der Bereich um eine Grundwellenlänge $\lambda_0$, innerhalb dessen das Ausgangssignal nahezu unabhängig von der Wellenlänge $\lambda$ der Strahlungsquelle ist, ist nach dem Bedampfen durch die Abstimmung auf die Grundwellenlänge $\lambda_0$ festgelegt und kann nicht mehr den tatsächlichen Gegebenheiten, z.B. nach Wechsel der Strahlungsquelle, angepaßt werden. Ein weiterer Nachteil ist, daß der Arbeitsbereich schmal ist, die Dispersionskompensation also nicht für ein weiteres Band $\Delta\lambda$ um die Grundwellenlänge $\lambda_0$ durchgeführt werden kann.

Ein Nachteil bei für spektroskopische Untersuchungen verwendeten Interferometern ist die große Empfindlichkeit des Ausgangssignals nicht nur von der Wellenlänge, sondern auch von Änderungen der Weglängendifferenz der Interferometerarme, z.B. durch Vibrationen der Meßapparatur. Dies führt zu einem fehlerbehafteten spektroskopischen Meßergebnis.

Der Erfindung liegt die Aufgabe zugrunde, ein Interferometer für elektromagnetische Strahlung zu schaffen, bei welchem in einem weiten Wellenlängenbereich $\Delta\lambda$ um eine einstellbare Grundwellenlänge $\lambda_0$ die Wellenlängenabhängigkeit des Ausgangssignals kompensierbar ist bei gleichzeitiger hoher Sensibilität bezüglich der Änderungen der Interferometerarmlänge. Weiterhin soll ein Interferometer für elektromagnetische Strahlung geschaffen werden, bei welchem die spektrale Auflösung gegenüber herkömmlichen Zweistrahlinterferometern vergleichbarer Armlänge erhöht ist, so daß das Ausgangssignal gegenüber Änderungen der Interferometerarmlänge stabilisiert ist.

Die Aufgabe wird gelöst durch ein Interferometer für elektromagnetische Strahlung, wenigstens bestehend aus zwei Interferometerarmen und einem Strahlteiler, wobei das Licht einer elektromagnetischen Strahlungsquelle mittels des Strahlteilers in zwei Teilstrahlen aufgeteilt und in je einen Interferometerarm eingespeist wird, die Teilstrahlen nach Durchlaufen der Interferometerarme mittels desselben oder eines weiteren Strahlteilers mit einer von der optischen Weglängendifferenz $\Delta\ln$ innerhalb der Interferometerarme und der Wellenlänge $\lambda$ abhängigen Phasendifferenz $\Delta\varphi = 2\pi\frac{\Delta\ln}{\lambda}$ wieder überlagert werden und die Intensität der überlagerten Welle mit einem Detektor gemessen wird, das durch folgende Merkmale gekennzeichnet ist:

a) In den Strahlengang ist wenigstens ein Polarisator eingebracht, der einen definierter Polarisationszustand $P_{1/2}^0$ der in die Interferometerarme einlaufenden elektromagnetischen Teilwellen herstellt, wobei der Polarisationszustand wellenlängenunabhängig ist und für die beiden Teilstrahlen verschieden sein kann.

b) In wenigstens einen Interferometerarm ist wenigstens ein optisches Element eingebracht, wobei das optische Element den Polarisationszustand $P_{1/2}^0$ der elektromagnetischen Teilwelle in Abhängigkeit von der Wellenlänge $\lambda$ ändert, d.h. jede spektrale Komponente $\lambda_i$ mit einer Polarisation $P_{1/2}(\lambda_i)$ kodiert, so daß die elektromagnetischen Teilwellen Polarisationszustände $P_1(\lambda)$ bzw. $P_2(\lambda)$ einnehmen. Die Gebiete $P_1(\lambda)$ und $P_2(\lambda)$, dargestellt auf der Poincare-Kugel, sind wenigstens teilweise verschieden voneinander.

c) Am Ausgang des Interferometers ist ein Analysator angeordnet, der einen einstellbaren Polarisationszustand $P_{det}$ durchläßt, wodurch für jede spektrale Komponente $\lambda_i$ die Projektionen $P_{det}(P_{1/2}(\lambda))$ gebildet werden und eine zusätzliche wellenlängenabhängige Phasendifferenz $\gamma(\lambda)$ zwischen den Teilwellen der spektralen Komponenten entsteht. Dabei ist $\gamma$ eine Funktion von $P_{1/2}(\lambda)$ und $P_{det}$.

Weiterhin wesentlich zur Lösung der Aufgabe ist ein Verfahren unter Anwendung eines derartigen Interferometers, welches dadurch gekennzeichnet ist, daß die Kompensation der Dispersion bzw. Wellenlängenabhängigkeit der Ausgangsintensität im Bereich um eine Grundwellenlänge $\lambda_0$, d.h. Stabilisierung des Interferometerausgangssignals bei spektralen Schwankungen der Wellenlänge um $\lambda_0$, und damit eine Erhöhung der Empfindlichkeit des Interferometers bezüglich Änderungen der Amlängendifferenz $\Delta l$ durch folgende Schritte erreicht wird:

a) Herstellung einer definierten, wellenlängenunabhängigen Ausgangspolarisation $P_{1/2}{}^0$ der in die Interferometerarme einlaufenden elektromagnetischen Teilwellen, wobei $P_1{}^0 \neq P_2{}^0$ sein kann;
b) Kodierung der einzelnen spektralen Komponenten der elektromagnetischen Teilwellen mit einer wellenlängenabhängigen Polarisation $P_1(\lambda)$ bzw. $P_2(\lambda)$;
c) Detektion einer definierten Polarisation $P_{det}$;
d) Abstimmung der Polarisationen $P_{1/2}{}^0$, $P_{1/2}(\lambda)$ und $P_{det}$ so aufeinander, daß für Wellenlängen $\lambda$ im Bereich von $\lambda_0$ gilt

$$\gamma(\lambda) = -\frac{1}{2}\Omega(P_{det},P_1(\lambda),P_2(\lambda)) \approx d+2\pi\frac{\Delta ln}{\lambda_0{}^2}(\lambda-\lambda_0),$$

bzw.

$$\frac{d\Omega}{d\lambda}(\lambda_0) \approx -4\pi\frac{\Delta ln}{\lambda_0{}^2},$$

wobei d eine Konstante und $\Omega(P_{det},P_1(\lambda),P_2(\lambda))$ die Fläche des sphärischen Dreiecks ist, das für festes $\lambda$ durch die Punkte $P_{det}$, $P_1(\lambda)$ und $P_2(\lambda)$ bei der Darstellung der Polarisationen auf der Poincaré-Einheitskugel definiert ist.

Weiterhin wesentlich zur Lösung der Aufgabe ist ein Verfahren unter Anwendung eines derartigen Interferometers, welches dadurch gekennzeichnet ist, daß eine Erhöhung der spektralen Auflösung des Interferometers im Bereich um eine Grundwellenlänge $\lambda_0$ durch folgende Schritte erreicht wird:

a) Herstellung einer definierten, wellenlängenunabhängigen Ausgangspolarisation $P_{1/2}{}^0$ der in die Interferometerarme einlaufenden elektromagnetischen Teilwellen, wobei $P_1{}^0 \neq P_2{}^0$ sein kann;
b) Kodierung der einzelnen spektralen Komponenten der elektromagnetischen Teilwellen mit einer wellenlängenabhängigen Polarisation $P_1(\lambda)$ bzw. $P_2(\lambda)$;
c) Detektion einer definierten Polarisation $P_{det}$;
d) Abstimmung der Polarisationen $P_{1/2}{}^0$, $P_{1/2}(\lambda)$ und $P_{det}$ so aufeinander, daß für $\lambda_0$ gilt $\Delta\varphi(\lambda_0) << -\frac{1}{2}\Omega(P_{det},P_1(\lambda_0), P_2(\lambda_0))$, wobei $\Omega(P_{det},P_1(\lambda_0),P_2(\lambda_0))$ die Fläche des sphärischen Dreiecks ist, das durch die Punkte $P_{det},P_1(\lambda_0)$ und $P_2(\lambda_0)$ bei der Darstellung der Polarisationen auf der Poincaré-Einheitskugel definiert ist.

Weitere vorteilhafte Ausgestaltungen des Interferometers sind in den Unteransprüchen 2 bis 10 gekennzeichnet.
Das erfindungsgemäße Interferometer sowie die damit durchführbaren erfindungsgemäßen Verfahren basieren auf folgenden Überlegungen:

Die im Interferometer induzierte Phasendifferenz $\Delta\varphi$ zwischen den beiden Teilwellen, die das Ausgangssignal des Interferometers bestimmt, ist eine Funktion der Wellenlänge $\lambda$ und der Armlängendifferenz $\Delta ln$:

$$\Delta\varphi(\lambda,\Delta ln) = 2\pi\frac{\Delta ln}{\lambda}$$

Als Funktion der Wellenlänge, d.h. beim geringfügigen Abweichen der Wellenlänge $\lambda$ von einer Grundwellenlänge $\lambda_0$, und bei konstanten Weglängen läßt sich die Phasendifferenz wie folgt entwickeln

$$\Delta\varphi(\lambda) \approx 2\,\pi\frac{\Delta\ln}{\lambda_0} - 2\pi\frac{\Delta\ln}{\lambda_0^2}(\lambda - \lambda0) = c - 2\pi\frac{\Delta\ln}{\lambda_0^2}(\lambda - \lambda_0); \; c = const.$$

Bei der Längenmessung ist jedoch eine Phasendifferenz erwünscht, welche nur von der optischen Weglängendifferenz $\Delta\ln$, also nicht von $\lambda$ bzw. $(\lambda-\lambda_0)$ abhängt. Insbesondere soll die Phasendifferenz bei konstanter Weglängendifferenz konstant sein. Wenn es gelingt, einen wellenlängenabhängigen Zusatzterm $\gamma(\lambda)$ zu der Phasendifferenz zu addieren, wobei $\gamma(\lambda)$ die Form

$$\gamma(\lambda) \approx d + 2\pi\frac{\Delta\ln}{\lambda_0^2}(\lambda-\lambda_0); \; d = const.$$

hat, so ist die Gesamtphasendifferenz $\Delta\varphi(\lambda)+\gamma(\lambda)$ zwischen den beiden Teilstrahlen in erster Näherung unabhängig von der Wellenlänge. Das detektierte Signal ändert sich also nicht, wenn die Wellenlänge $\lambda$ der Strahlungsquelle von der Grundwellenlänge $\lambda_0$ abweicht. Die Abhängigkeit des Ausgangssignals vom optischen Weg bleibt dabei voll erhalten. $\gamma(\lambda)$ entspricht einem anomalen Dispersionsterm, der durch einen mit der Wellenlänge zunehmenden Brechungsindex charakterisiert ist.

Die Zusatzphase $\gamma(\lambda)$ wird wie folgt eingeführt: Zunächst wird ein definierter, wellenlängenunabhängiger Polarisationszustand $P_{1/2}^0$ der in die Interferometerarme einlaufenden Teilwellen $\Psi_1$ und $\Psi_2$ hergestellt. Dies kann durch einen Polarisator hinter der Strahlungsquelle oder durch einen polarisierenden Strahlteiler beim Eintritt in die Interferometerarme oder durch eine Kombination von beidem geschehen. Weiterhin ist die Verwendung einer Strahlungsquelle möglich, welche Licht in einem definierten Polarisationszustand erzeugt, z.B. ein Laser. Dann kann auf weitere polarisierende Elemente verzichtet werden. Wichtig ist, daß die Polarisation $P_{1/2}^0$ unabhängig von der Wellenlänge ist.

In die Interferometerarme, wenigstens in einen von beiden, sind polarisierende Elemente eingebracht, welche den Polarisationszustand des durchlaufenden Lichts in Abhängigkeit von dessen Wellenlänge ändern. Sie kodieren also jede spektrale Komponente der Wellenlänge $\lambda$ je nach Interferometerarm mit einer Polarisation $P_1(\lambda)$ bzw. $P_2(\lambda)$. Diese polarisationskodierenden optischen Elemente sind doppelbrechende, optisch aktive oder elliptisch doppelbrechende Platten, z.B. Kristallplatten. Es ist auch möglich, zur Polarisationskodierung je ein weiteres Zweistrahlinterferometer zu verwenden.

Es ist notwendig, daß die Polarisationen $P_1(\lambda)$ bzw. $P_2(\lambda)$ für gewisse Wellenlängen $\lambda$ im Bereich einer Grundwellenlänge $\lambda_0$ nicht identisch sind. Stellt man die Polarisationen als normierte Stokes-Vektoren auf der Poincaré-Kugel dar, bedeutet das, daß die Bereiche $P_1(\lambda)$ und $P_2(\lambda)$ wenigstens teilweise nicht überlappen. Als Stokes-Vekor wird folgender Vierer-Vektor definiert:

$$P = (I, M, C, S),$$

mit

$$I = \left|\bar{e}_x\bar{E}\right|^2 + \left|\bar{e}_y\bar{E}\right|^2$$
$$M = \left|\bar{e}_x\bar{E}\right|^2 - \left|\bar{e}_y\bar{E}\right|^2$$
$$C = 2\,\mathrm{Re}\left[(\bar{e}_x\bar{E})^*(\bar{e}_y\bar{E})\right]$$
$$S = 2\,\mathrm{Im}\left[(\bar{e}_x\bar{E})^*(\bar{e}_y\bar{E})\right]$$

wobei I die Gesamtintensität der in $\bar{e}_z$-Richtung fortschreitenden elektromagnetischen Welle mit dem elektrischen Feldvektor $\bar{E}$ ist; M gibt den Grad der Ellipsizität der Polarisation an; C und S geben jeweils den Vorzug von $+45°$ zu $-45°$ bzw. rechtszirkular zu linkszirkular polarisiertem Licht an. Für polarisiertes Licht gilt stets

$$I^2 = M^2 + C^2 + S^2,$$

d.h. alle Stokes-Vektoren liegen auf einer Kugel mit Radius I, der Poincaré-Kugel. Wird die Intensität normiert, so hat diese Kugel den Radius 1. Die Intensität braucht nicht betrachtet zu werden, wenn es nur auf die Darstellung der Polarisationen ankommt. Der Stokes-Vektor $P=(1, 0, 0, 1)$ beschreibt z.B. vollkommen linkszirkular polarisiertes Licht, P = (1, 0, 1, 0) beschreibt linear mit 45° polarisiertes Licht.

Aufgrund der Wellenlängenabhängigkeit der Doppelbrechung, optischen Aktivität oder elliptischen Dopelbrechung werden die verschiedenen spektralen Komponenten beim Durchlaufen der Interferometerarme von der gemeinsamen Ausgangspolarisation $P_{1/2}{}^0$ in verschiedene wellenlängenabhängige Polarisationszustände $P_1(\lambda)$ bzw. $P_2(\lambda)$ überführt. Damit sich die Gebiete $P_1(\lambda)$ und $P_2(\lambda)$ nicht vollständig überlappen, werden die polarisationskodierenden optischen Elemente in den Interferometerarmen unterschiedlich orientiert.

Durch den Polarisator vor dem Detektor bzw. alternativ auch je einen Polarisator pro Interferometerarm wird nur eine bestimmte Detektionspolarisation $P_{det}$ detektiert. Für jede spektrale Komponente $\lambda_i$ wird also die Projektion $P_{det}(P_1(\lambda_i))$ und $P_{det}(P_2(\lambda_i))$ der Teilwellen gebildet und zur Interferenz gebracht. Dadurch wird eine zusätzliche wellenlängenabhängige Phasendifferenz $\gamma(\lambda_i)$ zwischen den Teilwellen der spektralen Komponenten erzeugt. Für diese wellenlängenabhängige Zusatzphase $\gamma(\lambda)$ gilt:

$$\gamma(\lambda) \cong -\frac{1}{2}\Omega(P_{det}, P_1(\lambda), P_2(\lambda)),$$

wobei $\Omega(P_{det}, P_1(\lambda), P_2(\lambda))$ die Fläche des sphärischen Dreiecks ist, das durch die Punkte $P_{det}, P_1(\lambda)$ und $P_2(\lambda)$ bei der Darstellung der Polarisationen auf der Poincaré-Einheitskugel definiert ist. $\gamma(\lambda)$ ist damit eine Funktion der Polarisationen $P_{det}, P_1(\lambda)$ und $P_2(\lambda)$. $\gamma(P_{det}, P_1(\lambda), P_2(\lambda))$ wird als Pancharatnams Phase bezeichnet.

Zur Dispersionskompensation werden $P_{det}, P_1(\lambda)$ und $P_2(\lambda)$ so gewählt, daß für Wellenlängen $\lambda$ im Bereich einer Grundwellenlänge $\lambda_0$ gilt:

$$\gamma(\lambda) \approx d + 2\pi\frac{\Delta ln}{\lambda_0{}^2}(\lambda - \lambda_0); \ d = const.$$

Dieses Einstellen des Arbeitsbereichs kann durch Variation der Eingangspolarisation(en), der polarsationskodierenden Elemente, z.B. deren Winkelstellung, Dicke, Verkippung, oder der Detektionspolarisation erfolgen.

Bringt man nun optische Elemente mit sehr großer Verzögerung in die Interferometerarme, so wird die Wellenlängenabhängigkeit der Durchlaßcharakteristik durch das entsprechend große $\gamma(\lambda)$ und nicht mehr durch die Interferometerphase $\Delta\varphi$ bestimmt. Das führt dazu, daß das Interferometer in diesem Bereich relativ unempfindlich gegenüber Änderungen der Weglängendifferenz ist, da die Längenempfindlichkeit nur durch $\Delta\varphi$ bestimmt wird. Interferometer mit dieser Eigenschaft eignen sich also für die präzise Spektroskopie.

Ein Beispiel der Erfindung ist in der Zeichnung dargestellt. Dabei zeigt

Figur 1                                                schematisch ein erfindungsgemäßes Interferometer
Figur 2                                                eine Poincaré-Kugel mit Darstellung der Polarisationen $P_{det}, P_1(\lambda)$ und $P_2(\lambda)$
Figuren 3a-c, 4 und 5                       Beispiele für Durchlaßcharakteristiken eines Interferometers als Funktion der Wellenlänge bzw. des Gangunterschieds für verschiedene Parametersätze

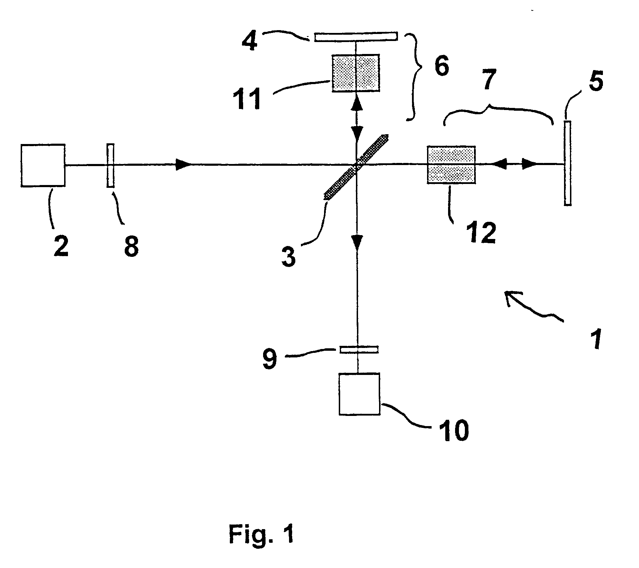

Figur 1 zeigt ein erfindungsgemäßes Interferometer 1 für elektromagnetische Strahlung, bei welchem das Licht einer elektromagnetischen Strahlungsquelle 2 mittels eines Strahlteilers 3 in zwei Teilstrahlen aufgeteilt und in je einen Interferometerarm 6, 7 eingespeist wird. Die Strahlungsquelle ist beispielsweise ein Laser oder eine andere Quelle wenigstens teilkohärenten Lichts. Die Teilstrahlen werden am Ende der Interferometerarme mit jeweils einem Spiegel 4, 5 in sich selbst abgebildet und in denselben Strahlengang zurückreflektiert. Nach Durchlaufen der Interferometerarme werden sie mittels desselben Strahlteilers 3 wieder überlagert. Die Intensität der überlagerten Welle wird mit einem Detektor 10 gemessen.

Ohne weitere Maßnahmen durch in den Strahlengang eingebrachte optische Elemente würden die Teilwellen nach Durchlaufen der Interferometerarme mit einer von der optischen Weglängendifferenz $\Delta ln$ innerhalb der Interferometerarme und der Wellenlänge $\lambda$ abhängigen Phasendifferenz $\Delta\varphi = 2\pi\frac{\Delta ln}{\lambda}$ überlagert werden. Je nach Phasendifferenz und Grad der Kohärenz der Strahlung kann dies zu völliger Auslöschung der am Detektor gemessenen Intensität führen.

Die in die Interferometerarme eingespeisten Teilwellen sind mittels eines Polarisators 8 polarisiert. Er stellt eine definierte Eingangspolarisation $P_{1/2}{}^0$ der in die Interferometerarme einlaufenden elektromagnetischen Teilwellen her. In diesem Fall gilt $P_1{}^0 = P_2{}^0$, da der Strahlteiler 3 den Strahl polarisationsunabhängig teilt.

In beiden Interferometerarmen befindet sich je ein optisches Element 11, 12, welches die Polarisation der Teilwelle in Abhängigkeit von der Wellenlänge verändert. Jede spektrale Komponente $\lambda_i$ wird daher mit einer Polarisation $P_{1/2}(\lambda_i)$ kodiert, so daß die elektromagnetischen Teilwellen Polarisationszustände $P_1(\lambda)$ bzw. $P_2(\lambda)$ einnehmen. Die Gebiete $P_1(\lambda)$ und $P_2(\lambda)$, dargestellt auf der Poincare-Kugel, sind wenigstens teilweise verschieden, was durch unterschiedliche oder unterschiedlich eingestellte optische Elemente 11, 12 erreicht wird.

Vor dem Detektor am Ausgang des Interferometers befindet sich ein Analysator 9, welcher einen einstellbaren Polarisationszustand $P_{det}$ durchläßt. Damit wird für jede spektrale Komponente $\lambda_i$ die Projektion $P_{det}(P_1(\lambda_i))$ bzw. $P_{det}$ $(P_2(\lambda_i))$ gebildet, welche dann hinter dem Analysator interferieren. Durch den Analysator entsteht eine zusätzliche wellenlängenabhängige Phasendifferenz $\gamma(\lambda)$ zwischen den Teilwellen der spektralen Komponenten, wobei $\gamma$ eine Funktion von $P_{1/2}(\lambda)$ und $P_{det}$ ist. Eine alternative Betrachtungsweise ist, daß die Teilwellen schon vor dem Analysator zu einer Welle mit Polarisation $P(\lambda_i)$ interferieren und davon die Projektion $P_{det}(P(\lambda_i))$ gebildet wird. Das Ergebnis in Bezug auf die gemessene Ausgangsintensität ist gleich.

Die Detektionspolarisation kann wie auch die Eingangspolarisation jede beliebige elliptische Polarisation sein. Besonders einfach zu realisieren sind lineare Polarisationen.

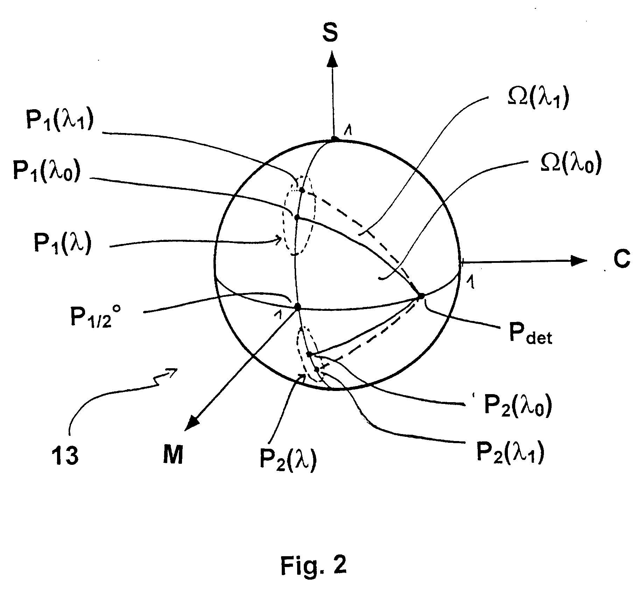

Figur 2 zeigt eine Poincaré-Kugel 13 zur Darstellung der Polarisationen $P_{1/2}^0$, $P_{det}$, $P_1(\lambda)$ und $P_2(\lambda)$. Die Poincaré-Kugel befindet sich im Ursprung eines Koordinatensystems, wobei auf den Achsen die oben definierten Größen M, C und S aufgetragen sind. Alle reinen Polarisationszustände sind in dieser Darstellungsweise Punkte auf der Oberfläche der Poincaré-Kugel mit Radius 1, d.h. es gilt stets $M^2 + C^2 + S^2 = 1$. Im folgenden wird die erste Komponente des oben definierten Stokes-Vektors, die Intensität, stets weggelassen, da die Intensität auf eins normiert wurde. Der Nordpol der Kugel mit den Koordinaten (0,0,1) entspricht vollständig linkszirkular polarisiertem Licht, Punkt auf dem Äquator entsprechen linear polarisiertem Licht mit verschiedenen Schwingungsebenen des elektrischen Feldvektors. Gebiete der oberen Halbkugel entsprechen beliebigen linksdrehenden elliptischen Polarisationen, Gebiete der unteren Halbkugel rechtsdrehenden elliptischen Polarisationen.

Am Eingang des Interferometers wird mittels des Polarisators eine Eingangspolarisation $P_{1/2}^0$ der in die Interferometerarme einlaufenden Teilwellen erzeugt. $P_{1/2}^0$ liegt in dieser Darstellung auf dem Äquator der Poincaré-Kugel sowie auf der M-Achse, hat also die Koordinaten (1,0,0) für alle Wellenlängen. $P_{1/2}^0$ ist damit wellenlängenunabhängig linear in x-Richtung polarisiertes Licht.

Durch in die Interferometerarme eingebrachte polariationsändernde optische Elemente wird die Eingangspolariation beider Teilstrahlen unabhängig voneinander als Funktion der Wellenlänge geändert. Die Polarisationen der spektralen Komponenten $\lambda$ des ersten Teilstrahls werden in ein Gebiet $P_1(\lambda)$ auf der oberen Halbkugel abgebildet (linksdrehende Polarisationen). Spiegelsymmetrisch zur Äquatorialebene der Kugel werden die Polarisationen der spektralen Komponenten $\lambda$ des zweiten Teilstrahls in ein Gebiet $P_2(\lambda)$ auf der unteren Halbkugel abgebildet (rechtsdrehende Polarisationen). Diese Bereiche sind gestrichelt dargestellt. Die Symmetrie bezüglich des Äquators kann dadurch erreicht werden, daß z.B. je eine Quarzplatte, die in der optischen Achse geschnitten ist, in die Arme des Interferometers gestellt wird, wobei die Platten relativ zueinander orthogonal orientiert sind.

In diesem Beispiel wird die Polariation für eine Grundwellenlänge $\lambda_0$ und eine weitere Wellenlänge $\lambda_i$ so geändert, daß sich die Punkte $P_{1/2}(\lambda_{0/1})$ auf einem Großkreis mit C=0 befinden, wobei die M-Komponente von $P_{1/2}$ $(\lambda_0)$ bzw. $P_{1/2}(\lambda_1)$ jeweils gleich ist und sich die entsprechenden S-Komponenten nur im Vorzeichen unterscheiden.

Weiterhin ist die Detektionspolarisation $P_{det}$ dargestellt, welche mit dem Analysator am Interferometerausgang durchgelassen wird. In diesem Beispiel ist $P_{det}$ eine beliebige lineare Polarisation, dargestellt durch einen Punkt auf dem Äquator, was auch besonders leicht mittels eines einfachen Polarisators als Analysator realisiert werden kann.

Durch den Analysator wird von den Teilstrahlen nach Durchlaufen der Interferometerarme jeweils nur die herausprojizierte Komponente $P_{det}(P_{1/2}(\lambda))$ durchgelassen und kann interferieren und zum detektierten Signal beitragen. Man kann zeigen, daß dadurch für eine einzelne spektrale Komponente, z.B. mit der Wellenlänge $\lambda_0$ eine Phasendifferenz $\gamma(\lambda_0)$ zwischen den beiden Teilstrahlen erzeugt wird welche proportional zur von den Punkten $P_1(\lambda_0)$, $P_2$ $(\lambda_0)$ und $P_{det}$ aufgespannten sphärischen Dreiecksfläche $\Omega(\lambda_0)$ ist. Es gilt $\gamma(\lambda_0) = -\frac{1}{2}\Omega(\lambda_0)$.

In der Zeichnung sind die Dreiecksflächen $\Omega(\lambda_0)$ und $\Omega(\lambda_1)$ für zwei verschiedene spektrale Komponenten $\lambda_0$ bzw. $\lambda_1$ dargestellt. $\Omega(\lambda_0)$ ist mit durchgezogenen Linien begrenzt, $\Omega(\lambda_1)$ mit gestrichelten.

Durch die Wahl der optischen Komponenten können $P_{1/2}^0$, $P_{det}$, $P_1(\lambda)$ und $P_2(\lambda)$ so aufeinander abgestimmt werden, daß die Dispersion des Interferometers bzw. die Wellenlängenabhängigkeit des Ausgangssignals oder auch dessen Abhängigkeit von den Interferometerarmlängen, durch die Zusatzphase $\gamma(\lambda)$ kompensiert wird.

Bei der Dispersionskompensation werdem für eine Grundwellenlänge $\lambda_0$ die Bereiche $P_1(\lambda)$ und $P_2(\lambda)$ sowie $P_{det}$ so gewählt, daß bei Veränderung der Wellenlänge von $\lambda_0$ zu $\lambda_1$, also um $\Delta\lambda = \lambda_0 - \lambda_1$ die Veränderung der Zusatzphase $\Delta\gamma(\lambda) = -\frac{1}{2}(\Omega(\lambda_0) - \Omega(\lambda_1))$ die durch die Änderung der Wellenlänge induzierte Interferometerphasendifferenz gerade kompensiert. Diese Abstimmung ist durch die Wahl von $P_1(\lambda)$ und $P_2(\lambda)$ und/oder $P_{det}$ möglich. $P_1(\lambda)$ und $P_2$ $(\lambda)$ können durch die Wahl der Eingangspolarisation $P_{1/2}^0$ und/oder die Stellung/Ausrichtung der optischen Elemente beeinflußt werden.

Ein bevorzugter Fall liegt vor, wenn die Parameter der Polarisationen $P_1(\lambda)$ und $P_2(\lambda)$ jeweils symmetrisch zum Punkt $P_{1/2}^0$ (Eingangspolarisation) auf der Poincaré-Kugel auf dem Großkreis $P_1(\lambda_0)$,$P_2(\lambda_0)$, $P_{1/2}^0$ angeordnet sind und der Analysator Polarisationen $P_{det}$ auf dem Äquator der Poincaré-Kugel durchläßt. Für diesen Fall beträgt die Intensität $I(\lambda)$ hinter dem Analysator:

$$I(\lambda) = I_0[1+\cos2\Theta\cos\Phi(\lambda)+\cos\delta(\cos2\Theta+\cos\Phi(\lambda))+\sin\delta\sin2\Theta\sin\Phi(\lambda)]$$

Dabei sind $2\Theta$ der durch $P_{1/2}{}^0$ und $P_{det}$ und $\Phi(\lambda)$ der durch $P_{1/2}{}^0$ und $P_1(\lambda)$ festgelegte Abstandswinkel auf der Poincaré-Kugel; $\delta$ ist die Phasendifferenz, die von Anfang an zwischen den beiden interferierenden Teilstrahlen bestand, z.B. durch eine Differenz der Interferometerarmlängen verursacht.

Die Verteilung der Polarisationen $P_1(\lambda)$ und $P_2(\lambda)$ wird durch zwei Quarzplatten der gleichen Dicke d erreicht, die entgegengesetzt orientiert sind und unter einem Winkel von 45° im Strahlengang stehen. Es gilt dann:

$$\Phi(\lambda)=\pi-2\pi\frac{d\cdot\Delta n(\lambda)}{\lambda}$$

Dabei ist $\Delta n(\lambda)$ die Doppelbrechung der Quarzplatten bei der Wellenlänge $\lambda$. Durch Einsetzen dieser Beziehung in die obige Intensitätsformel erhält man die spektrale Interferometercharkteristik $I(\lambda)$.

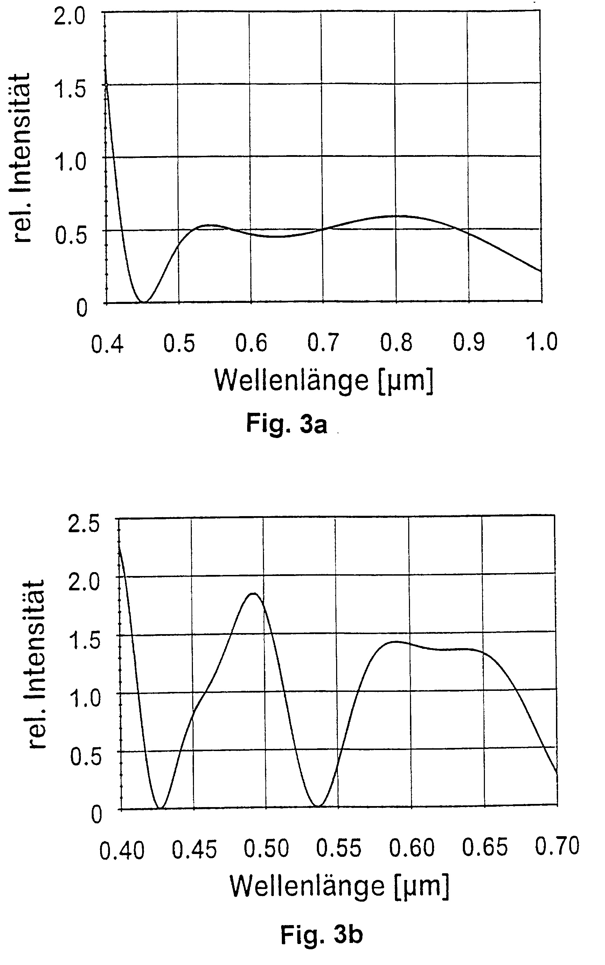

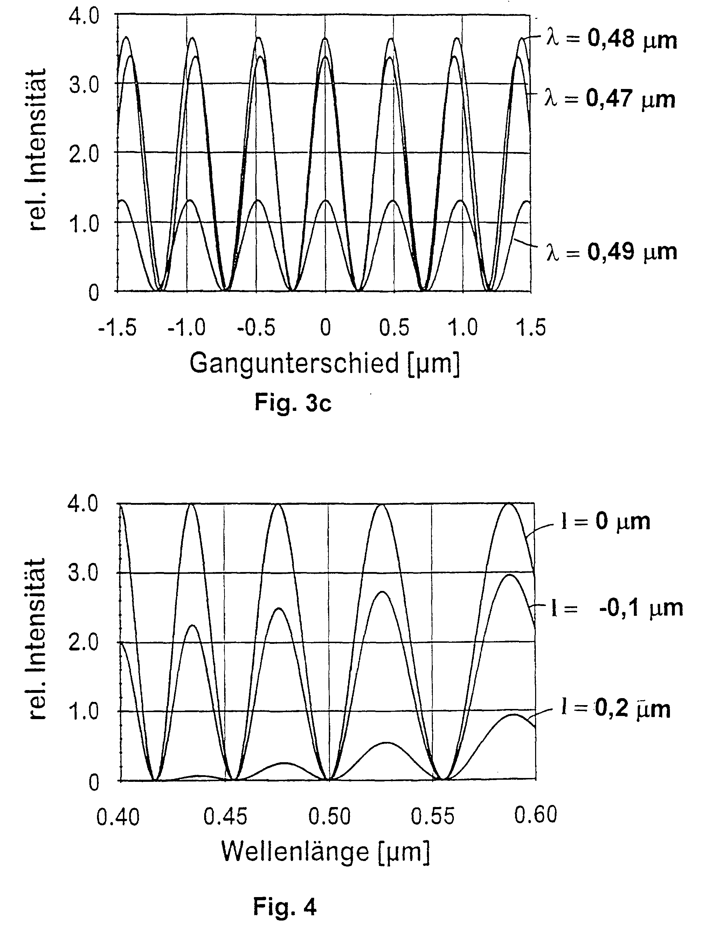

In den folgenden Figuren 3a-c, 4 und 5 sind Beispiele für typische Durchlaßcharakteristiken eines erfindungsgemäßen Interferometers gezeigt. Die Daten sind simuliert. Auf der x-Achse ist mit Ausnahme der Figur 3c jeweils die Wellenlänge der verwendeten elektromagnetischen Strahlung in Einheiten von µm aufgetragen, auf der y-Achse ist die Transmission des Interferometers, d.h. die am Interferometerausgang detektierte Intensität $I(\lambda)$, in beliebigen Einheiten als Funktion der Wellenlänge bzw. des Gangunterschieds $\Delta(l\cdot n)$ bzw.l dargestellt.

Die Durchlaßcharakteristik eines gewöhnlichen Zweistrahlinterferometers weist bei einem gegebenen Weglängenunterschied $\Delta ln$ in den Interferometerarmen Transmissionsmaxima bei $\lambda_{max} = \frac{\Delta ln}{m}$ und Transmissionsminima bei $\lambda_{min} = \frac{2\Delta ln}{2m+1}$ auf, wobei m eine ganze Zahl ist.

Dieser Verlauf wird durch das Einbringen von optischen Komponenten, bei den gezeigten Beispielen zwei gleichdicke Quarzplatten der Dicke d in den Strahlengang des erfindungsgemäßen Interferometers modifiziert.

In Figur 3a wurde die Wellenlängenabhängigkeit des Ausgangssignals $I(\lambda)$ für Wellenlängen im Bereich von etwa 500 bis 800 nm kompensiert. Die Transmissionskurve weist in diesem Bereich ein Plateau auf, d.h. das Ausgangssignal ist stabil gegenüber Schwankungen der Wellenlänge und damit besonders empfindlich auf Schwankungen der optischen Weglängendifferenz. Der zur Realisation dieses dispersionslosen Interferometers verwendete Parametersatz ist: $2\Theta=2{,}8$; $2d=150$ µm; $l=100$ µm, wobei l der Anfangsgangunterschied in den beiden Interferometerarmen, d.h. die Differenz der optischen Weglängen zwischen den beiden Teilstrahlen, ist. l hängt mit der oben definierten Anfangsphasendifferenz $\delta$ wie folgt zusammen: $l= \frac{\delta\cdot\lambda}{2\pi\cdot n}$.

In Figur 3b ist ein weiteres Beispiel für Dispersionskompensation gezeigt, bei dem die Parameter $2\Theta=2{,}52$; $2d=200$ µm und $l=6000$ µm verwendet wurden. Es wurde ein Plateau in der Durchlaßcharakteristik im Bereich um $\lambda=600$ nm erzielt.

Figur 3c zeigt die Durchlaßcharakteristik des Interferometers als Funktion des Anfangsgangunterschieds 1 in µm unter Verwendung der Parameter $2\Theta=0$ und $2d=540$ µm. Die Intensität I(l) ist für drei verschiedene Wellenlängen $\lambda=0{,}48/0{,}47/0{,}49$ µm aufgetragen. Obwohl die durchgelassene Intensität in ihrer Amplitude stark von der Wellenlänge abhängt, ist der Verlauf der dargestellten Intensitäten als Funktion der Variable 1 für alle drei Kurven nahezu gleich. Insbesondere ist die Lage der Intensitätsmaxima und - minima nach Figur 3c nahezu unabhängig von der verwendeten Wellenlänge und hängt nur von der Weglängendifferenz 1 ab. Damit liegt auch unter Verwendung der obengenannten Parameter ein dispersionsloses Interferometer vor. Das Ausgangssignal des Interferometers wird somit nicht durch Schwankungen der Wellenlänge beeinflußt und läßt sich zur genaueren, unverfälschten Bestimmung der Armlängendifferenz 1 verwenden.

Bei der in Figur 4 dargestellten Durchlaßcharakteristik wurden dieselben Parameter wie aus Figur 3c verwendet, also $2\Theta=0$ und $2d=540$ µm. Im Gegensatz zu Figur 3c ist hier wiederum die Intensität I als Funktion der Wellenlänge $\lambda$ aufgetragen. Die drei Kurven entsprechen verschiedenen Werten für den Gangunterschied $l=0/0{,}1/0{,}2$ µm. Obwohl die beiden Teilstrahlen des Interferometers dabei jeweils unterschiedliche Gangunterschiede haben, ist die Lage der Maxima bzw. Minima der Intensitätswerte als Funktion der Wellenlänge nahezu unabhängig von der Wellenlänge.

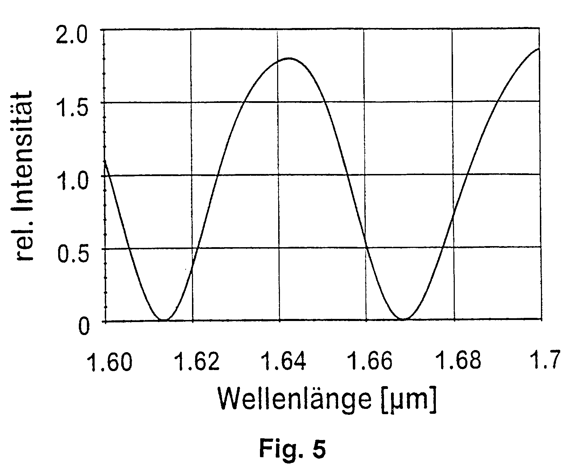

In Abbildung 5 ist die Wellenlängenabhängigkeit der Transmission im Gegensatz zu Figur 3a-c nicht kompensiert, sondern durch das Einbringen optischer Elemente in den Strahlengang des Interferometers erhöht. Das Interferometer weist einen periodischen Durchlaßbereich mit breiten Transmissionsmaxima und schmalen Minima auf. Die Transmissionskurve weist daher Stellen auf, bei denen sich die Transmission stärker als beim nicht manipulierten Interferometer mit der Wellenlänge ändert. In diesen Bereichen können daher geringe Veränderungen $\Delta\lambda$ in der Wellenlänge detektiert werden, da sie große Veränderungen des Ausgangssignals hervorrufen. Die spektrale Auflösung des Interferometers ist somit in gewissen Wellenlängenbereichen erhöht, wobei sich die Wellenlängenbereiche durch die Wahl der optischen Elemente einstellen lassen. Für diese Darstellung wurden die Parameter $2\Theta=2{,}3$, $2d=6000$ µm und $l=100$ µm verwendet.

**Patentansprüche**

1. Interferometer (1) für elektromagnetische Strahlung, wenigstens bestehend aus zwei Interferometerarmen (6,7) und einem Strahlteiler (3), wobei das Licht einer elektromagnetischen Strahlungsquelle (2) mittels des Strahlteilers (3) in zwei Teilstrahlen aufgeteilt und in je einen Interferometerarm (6, 7) eingespeist wird, die Teilstrahlen nach Durchlaufen der Interferometerarme mittels desselben oder eines weiteren Strahlteilers (3) mit einer von der optischen Weglängendifferenz $\Delta$l·n innerhalb der Interferometerarme und der Wellenlänge $\lambda$ abhängigen Phasendifferenz $\Delta\varphi = 2\pi\frac{\Delta(l \cdot n)}{\lambda}$ wieder überlagert werden und die Intensität der überlagerten Welle mit einem Detektor (10) gemessen wird, **gekennzeichnet durch** folgende Merkmale:

   a) wenigstens einen in den Strahlengang eingebrachten Polarisator (8), der einen definierten Polarisationszustand $P_{1/2}{}^0$ der in die Interferometerarme einlaufenden elektromagnetischen Teilwellen herstellt, wobei der Polarisationszustand wellenlängenunabhängig ist und für die beiden Teilstrahlen verschieden sein kann,
   b) wenigstens ein optisches Element (11, 12), das in wenigstens einen Interferometerarm (6, 7) eingebracht ist, wobei das optische Element den Polarisationszustand $P_{1/2}{}^0$ der elektromagnetischen Teilwelle in Abhängigkeit von der Wellenlänge $\lambda$ ändert, d.h. jede spektrale Komponente $\lambda_i$ mit einer Polarisation $P_{1/2}(\lambda_i)$ kodiert, so daß die elektromagnetischen Teilwellen Polarisationszustände $P_1(\lambda)$ bzw. $P_2(\lambda)$ einnehmen, wobei die Gebiete $P_1(\lambda)$ und $P_2(\lambda)$, dargestellt auf der Poincare-Kugel, wenigstens teilweise verschieden sind,
   c) einen Analysator (9), welcher am Ausgang des Interferometers angeordnet ist und der einen einstellbaren Polarisationszustand $P_{det}$ durchläßt, wodurch für jede spektrale Komponente $\lambda_i$ die Projektionen $P_{det}(P_{1/2}(\lambda))$ gebildet werden und eine zusätzliche wellenlängenabhängige Phasendifferenz $\gamma(\lambda)$ zwischen den Teilwellen der spektralen Komponenten entsteht, wobei $\gamma$ eine Funktion von $P_{1/2}(\lambda)$ und $P_{det}$ ist.

2. Interferometer nach Anspruch 1, **dadurch gekennzeichnet,**
   **daß** in beiden Interferometerarmen (6, 7) optische Elemente (11, 12) eingebracht sind.

3. Interferometer nach Anspruch 1 oder 2, **dadurch gekennzeichnet,**
   **daß** der Strahlteiler (3) ein polarisierender Strahlteiler ist, welcher neben der Strahlteilung die Funktion des Polarisators (8) hat.

4. Interferometer nach einem der Ansprüche 1 bis 3, **dadurch gekennzeichnet,**
   **daß** die polarisationskodierenden optischen Elemente (11, 12) doppelbrechende, optisch aktive oder elliptisch doppelbrechende Platten, z.B. Kristallplatten, sind.

5. Interferometer nach Anspruch 4, **dadurch gekennzeichnet,**
   **daß** die polarisationskodierenden optischen Elemente (11, 12) in den beiden Interferometerarmen unterschiedlich orientiert sind, so daß sie polarisiertes Licht in unterschiedliche und infolge der Wellenlängenabhängigkeit der Doppelbrechung, optischen Aktivität oder elliptischen Doppelbrechung wellenlängenabhängige Polarisationszustände $P_1(\lambda)$ bzw. $P_2(\lambda)$ überführen.

6. Interferometer nach Anspruch 2, **dadurch gekennzeichnet,**
   **daß** die polarisationskodierenden optischen Elemente (11, 12) je ein weiteres Zweistrahlinterferometer sind.

7. Interferometer nach Anspruch 2, **dadurch gekennzeichnet,**
   **daß** die polarisationskodierenden optischen Elemente (11, 12) anisotrope, im benutzten Wellenlängenbereich transparente Kunststoff- oder Glasplatten sind.

8. Interferometer nach einem der Ansprüche 1 bis 7, **dadurch gekennzeichnet,**
   **daß** $P_{1/2}{}^0$, $P_{1/2}(\lambda)$ und $P_{det}$ durch die relative Stellung des Polarisators (8), des Analysators (9) sowie die Wahl und die Ausrichtung der polarisationsändernden optischen Elemente (11, 12) so gewählt sind, daß die zusätzliche Phasendifferenz $\gamma(\lambda)$ die Interferometerphase $\Delta\varphi = 2\pi\frac{\Delta(l \cdot n)}{\lambda}$ bei fester optischer Weglängendifferenz $\Delta(l \cdot n)$ kompensiert, so daß die Ausgangsintensität das Interferometers in einem Wellenlängenbereich $\Delta\lambda$ um eine Grundwellenlänge $\lambda_0$ nahezu unabhängig von der Wellenlänge ist, d.h. gegenüber spektralen Schwankungen der Lichtquelle unempfindlich ist.

9. Interferometer nach einem der Ansprüche 1 bis 7, **dadurch gekennzeichnet,**
   **daß** $P_{1/2}{}^0$, $P_{1/2}(\lambda)$ und $P_{det}$ durch die relative Stellung des Polarisators (8), des Analysators (9) sowie die Wahl und die Ausrichtung der polarisationsändernden optischen Elemente (11, 12) so gewählt sind, daß die zusätzliche

Phasendifferenz $\gamma(\lambda)$ die Interferometerphase $\Delta\varphi = 2\pi\frac{\Delta(l\cdot n)}{\lambda}$ weit übertrifft und damit die gesamte Interferometerphase $\Delta\varphi + \gamma(\lambda)$ so modifiziert, daß die Wellenlängenabhängigkeit des Ausgangssignals des Interferometers in einem Wellenlängenbereich $\Delta\lambda$ um eine Grundwellenlänge $\lambda_0$ erhöht ist.

10. Interferometer nach Anspruch 8 oder 9, **dadurch gekennzeichnet,**
**daß** der spektrale Arbeitsbereich $\lambda_0$, $\Delta\lambda$ des Gerätes durch Änderung der Stellung des Polarisators, d.h. des Polarisationszustandes $P_{1/2}{}^0$, und/oder durch Änderung der Stellung des Analysators, d.h. der Detektionspolarisation $P_{det}$, und/oder durch Verstellen, Verkippen und/oder durch Dickenänderung und/oder durch Orientierungsänderung der Verzögerungsplatten in einem oder beiden Interferometerarmen, d.h. Änderung von $P_{1/2}(\lambda)$, veränderbar ist.

11. Interferometer nach einem der vorangegangenen Ansprüche, **dadurch gekennzeichnet,**
**daß** der am Ausgang des Interferometers angeordnete Analysator (9) ein drehbarer polarisierender Strahlteiler ist.

12. Verfahren unter Anwendung eines Interferometers gemäß einem der Ansprüche 1 bis 11,
**dadurch gekennzeichnet,**
**daß** die Kompensation der Dispersion bzw. Wellenlängenabhängigkeit der Ausgangsintensität im Bereich um eine Grundwellenlänge $\lambda_0$, d.h. Stabilisierung des Interferometerausgangssignals bei spektralen Schwankungen der Wellenlänge um $\lambda_0$, und damit eine Erhöhung der Empfindlichkeit des Interferometers bezüglich Änderungen der Amlängendifferenz $\Delta l$ durch folgende Schritte erreicht wird:

a) Herstellung einer definierten, wellenlängenunabhängigen Ausgangspolarisation $P_{1/2}{}^0$ der in die Interferometerarme einlaufenden elektromagnetischen Teilwellen, wobei $P_1{}^0 \neq P_2{}^0$ sein kann;
b) Kodierung der einzelnen spektralen Komponenten der elektromagnetischen Teilwellen mit einer wellenlängenabhängigen Polarisation $P_1(\lambda)$ bzw. $P_2(\lambda)$;
c) Detektion einer definierten Polarisation $P_{det}$;
d) Abstimmung der Polarisationen $P_{1/2}{}^0$, $P_{1/2}(\lambda)$ und $P_{det}$ so aufeinander, daß für Wellenlängen $\lambda$ im Bereich von $\lambda_0$ gilt

$$\gamma(\lambda) = -\frac{1}{2}\Omega(P_{det}, P_1(\lambda), P_2(\lambda)) \approx d + 2\pi\frac{\Delta l n}{\lambda_0{}^2}(\lambda - \lambda_0),$$

bzw.

$$\frac{d\Omega}{d\lambda}(\lambda_0) \approx -4\pi\frac{\Delta l n}{\lambda_0{}^2},$$

wobei d eine Konstante und $\Omega(P_{det}, P_1(\lambda), P_2(\lambda))$ die Fläche des sphärischen Dreiecks ist, das für festes $\lambda$ durch die Punkte $P_{det}$, $P_1(\lambda)$ und $P_2(\lambda)$ bei der Darstellung der Polarisationen auf der Poincaré-Einheitskugel definiert ist.

13. Verfahren unter Anwendung eines Interferometers gemäß einem der Ansprüche 1 bis 11,
**dadurch gekennzeichnet,**
**daß** eine Erhöhung der spektralen Auflösung des Interferometers im Bereich um eine Grundwellenlänge $\lambda_0$ durch folgende Schritte erreicht wird:

a) Herstellung einer definierten, wellenlängenunabhängigen Ausgangspolarisation $P_{1/2}{}^0$ der in die Interferometerarme einlaufenden elektromagnetischen Teilwellen, wobei $P_1{}^0 \neq P_2{}^0$ sein kann;
b) Kodierung der einzelnen spektralen Komponenten der elektromagnetischen Teilwellen mit einer wellenlängenabhängigen Polarisation $P_1(\lambda)$ bzw. $P_2(\lambda)$;
c) Detektion einer definierten Polarisation $P_{det}$;
d) Abstimmung der Polarisationen $P_{1/2}{}^0$, $P_{1/2}(\lambda)$ und $P_{det}$ so aufeinander, daß für $\lambda_0$ gilt $\Delta\varphi(\lambda_0) << \frac{1}{2}\Omega(P_{det}, P_1(\lambda_0), P_2(\lambda_0))$, wobei $\Omega(P_{det}, P_1(\lambda_0), P_2(\lambda_0))$ die Fläche des sphärischen Dreiecks ist, das durch die Punkte $P_{det}$, $P_1(\lambda_0)$ und $P_2(\lambda_0)$ bei der Darstellung der Polarisationen auf der Poincaré-Einheitskugel definiert ist.

**Claims**

1. Interferometer (1) for electromagnetic radiation, at least consisting of two interferometer arms (6, 7) and a beam splitter (3), the light from an electromagnetic radiation source (2) being divided into two partial beams by means of the beam splitter (3) and the two partial beams each being supplied to an interferometer arm (6, 7), wherein, after passing through the interferometer arms, the partial beams are again superimposed by means of the same or a further beam splitter (3) with a phase difference $\Delta\varphi = 2\pi\frac{\Delta(l \cdot n)}{\lambda}$ dependent on the optical path-length difference $\Delta ln$ within the interferometer arms and on the wavelength $\lambda$ and the intensity of the superimposed wave is measured with a detector (10), **characterized by** the following features:

   a) at least one polarizer (8) positioned in the optical path, said polarizer (8) producing a defined polarization state $P_{1/2}{}^0$ of the electromagnetic partial waves entering the interferometer arms, the polarization state being wavelength-independent and possibly being different for the two partial beams;
   b) at least one optical element (11, 12) positioned in at least one interferometer arm (6, 7), the optical element changing the polarization state $P_{1/2}{}^0$ of the electromagnetic partial wave as a function of the wavelength $\lambda$, i. e. coding each spectral component $\lambda_i$ with a polarization $P_{1/2}(\lambda_i)$, with the result that the electromagnetic partial waves assume polarization states $P_1(\lambda)$ and $P_2(\lambda)$, the regions $P_1(\lambda)$ and $P_2(\lambda)$, when represented on the Poincare sphere, being at least partially different;
   c) an analyzer (9) which is disposed at the output of the interferometer and which allows through an adjustable polarization state $P_{det}$, whereby the projections $P_{det}(P_{1/2}(\lambda))$ are formed for each spectral component $\lambda_i$ and an additional wavelength-dependent phase difference $\gamma(\lambda)$ between the partial waves of the spectral components is produced, $\gamma$ being a function of $P_{1/2}(\lambda)$ and $P_{det}$.

2. Interferometer according to claim 1, **characterized in that** optical elements (11, 12) are positioned in both interferometer arms (6, 7).

3. Interferometer according to claim 1 or 2, **characterized in that** the beam splitter (3) is a polarizing beam splitter which, in addition to beam splitting, has the function of the polarizer (8).

4. Interferometer according to any one of claims 1 to 3, **characterized in that** the polarization-coding optical elements (11, 12) are birefringent, optically active or elliptically birefringent plates, e.g. crystal plates.

5. Interferometer according to claim 4, **characterized in that** the polarization-coding optical elements (11, 12) in the two interferometer arms are differently oriented, with the result that they convert polarized light to different polarization states $P_1(\lambda)$ and $P_2(\lambda)$ which are wavelength-dependent as a consequence of the wavelength-dependence of the birefringence, optical activity or elliptical birefringence.

6. Interferometer according to claim 2, **characterized in that** each of the polarization-coding optical elements (11, 12) is a further two-beam interferometer.

7. Interferometer according to claim 2, **characterized in that** the polarization-coding optical elements (11, 12) are anisotropic plastic or glass plates which are transparent in the wavelength range used.

8. Interferometer according to any one of claims 1 to 7, **characterized in that** $P_{1/2}{}^0$, $P_{1/2}(\lambda)$ and $P_{det}$ are so selected by the relative positions of the polarizer (8) and of the analyzer (9) as well as through the choice and orientation of the polarizationchanging optical elements (11, 12) that the additional phase difference $\gamma(\lambda)$ compensates the interferometer phase $\Delta\varphi = 2\pi\frac{\Delta(l \cdot n)}{\lambda}$ at a fixed optical path-length difference $\Delta(l \cdot n)$, with the result that the output intensity of the interferometer in a wavelength range $\Delta\lambda$ about a fundamental wavelength $\lambda_0$ is virtually independent of the wavelength, i.e. is insensitive to spectral fluctuations of the light source.

9. Interferometer according to any one of claims 1 to 7, **characterized in that** $P_{1/2}{}^0$, $P_{1/2}(\lambda)$ and $P_{det}$ are so selected by the relative positions of the polarizer (8) and of the analyzer (9) as well as through the choice and orientation of the polarizationchanging optical elements (11, 12) that the additional phase difference $\gamma(\lambda)$ far exceeds the interferometer phase $\Delta\varphi = 2\pi\frac{\Delta(l \cdot n)}{\lambda}$ and thus modifies the entire interferometer phase

$\Delta\varphi+\gamma(\lambda)$ such that the wavelength dependence of the output signal of the interferometer in a wavelength range $\Delta\lambda$ about a fundamental wavelength $\lambda_0$ is increased.

10. Interferometer according to claim 8 or 9, **characterized in that**
the spectral working range $\lambda_0$, $\Delta\lambda$ of the device is variable by changing the position of the polarizer, i.e. the polarization state $P_{1/2}{}^0$, and/or by changing the position of the analyzer, i.e. the detection polarization $P_{det}$, and/or by moving, tilting and/or changing the thickness and/or by changing the orientation of the retardation plates in one or both interferometer arms, i.e. by changing $P_{1/2}(\lambda)$.

11. Interferometer according to any one of the preceding claims, **characterized in that**
the analyzer (9) disposed at the output of the interferometer is a rotatable polarizing beam splitter.

12. Process using an interferometer according to any one of claims 1 to 11,
**characterized in that**
the compensation of the dispersion or wavelength-dependence of the output intensity in the range about a fundamental wavelength $\lambda_0$, i.e. the stabilization of the interferometer output signal in the case of spectral fluctuations of the wavelength about $\lambda_0$, and thus an increase of the sensitivity of the interferometer with respect to changes of the arm length difference $\Delta l$ are achieved by the following steps:

 a) production of a defined, wavelength-independent initial polarization $P_{1/2}{}^0$ of the electromagnetic partial waves entering the interferometer arms, where $P_1{}^0 \neq P_2{}^0$ is possible:
 b) coding of the individual spectral components of the electromagnetic partial waves with a wavelength-dependent polarization $P_1(\lambda)$ or $P_2(\lambda)$;
 c) detection of a defined polarization $P_{det}$;
 d) matching of the polarizations $P_{1/2}{}^0$, $P_{1/2}(\lambda)$ and $P_{det}$ such that for wavelengths $\lambda$ in the region of $\lambda_0$ there applies

$$\gamma(\lambda) = -\frac{1}{2}\Omega(P_{det}, P_1(\lambda), P_2(\lambda)) \approx d + 2\pi\frac{\Delta ln}{\lambda_0{}^2}(\lambda-\lambda_0),$$

 and

$$\frac{d\Omega}{d\lambda}(\lambda_0) \approx -4\pi\frac{\Delta ln}{\lambda_0{}^2}$$

 where d is a constant and $\Omega(P_{det},P_1(\lambda),P_2(\lambda))$ is the area of the spherical triangle defined for fixed $\lambda$ by the points $P_{det}$, $P_1(\lambda)$ and $P_2(\lambda)$ when the polarizations are represented on the Poincaré unit sphere.

13. Process using an interferometer according to any one of claims 1 to 11,
**characterized in that**
an increase of the spectral resolution of the interferometer in the range about a fundamental wavelength $\lambda_0$ is achieved by the following steps:

 a) production of a defined, wavelength-independent initial polarization $P_{1/2}{}^0$ of the electromagnetic partial waves entering the interferometer arms, where $P_1{}^0 \neq P_2{}^0$ is possible:
 b) coding of the individual spectral components of the electromagnetic partial waves with a wavelength-dependent polarization $P_1(\lambda)$ or $P_2(\lambda)$;
 c) detection of a defined polarization $P_{det}$;
 d) matching of the polarizations $P_{1/2}{}^0$, $P_{1/2}(\lambda)$ and $P_{det}$ such that for $\lambda_0$ there applies $\Delta\varphi(\lambda_0) \ll \frac{1}{2}\Omega(P_{det},P_1(\lambda_0), P_2(\lambda_0))$, where $\Omega(P_{det},P_1(\lambda_0),P_2(\lambda_0))$ is the area of the spherical triangle defined by the points $P_{det}$, $P_1(\lambda_0)$ and $P_2(\lambda_0)$ when the polarizations are represented on the Poincaré unit sphere.

**Revendications**

1. Interféromètre (1) pour la radiation électromagnétique consistant au moins en deux bras d'interféromètre (6, 7) et un dédoubleur de faisceau (3), la lumière d'une source lumineuse électromagnétique (2) étant répartie, au moyen du dédoubleur de faisceau (3), sur deux rayons partiels avant d'être introduite dans chaque bras d'interféromètre (6, 7), les rayons partiels, après le passage à travers les bras d'interféromètre, étant superposés de nouveau au moyen dudit dédoubleur de faisceau ou d'un autre dédoubleur (3) avec une différence de phase $\Delta\varphi = 2\pi\frac{\Delta(l\cdot n)}{\lambda}$ fonction de la différence de parcours optique $\Delta ln$ dans les bras d'interféromètre et de la longueur d'onde $\lambda$ et l'intensité de l'onde superposée étant mesurée à l'aide d'un détecteur (10), **caractérisé par** les caractéristiques suivantes:

a) au moins un polarisateur (8) placé dans le parcours optique qui établit un état de polarisation défini $P_{1/2}{}^0$ des ondes partielles entrant dans les bras d'interféromètre, l'état de polarisation ne dépendant pas de la longueur d'onde et pouvant être différent pour les deux rayons partiels;

b) au moins un élément optique (11, 12) introduit dans au moins un bras d'interféromètre (6, 7), l'élément optique modifiant l'état de polarisation $P_{1/2}{}^0$ de l'onde partielle électromagnétique en fonction de la longueur d'onde $\lambda$, codant donc chaque composante spectrale $\lambda_i$ avec une polarisation $P_1(\lambda)$ de sorte que les ondes partielles électromagnétiques assument des états de polarisation $P_{1/2}(\lambda_i)$ ou $P_2(\lambda)$, les zones $P_1(\lambda)$ et $P_2(\lambda)$ représentées sur la boule de Poincaré différant du moins partiellement l'une de l'autre;

c) un analyseur (9) disposé à la sortie de l'interféromètre qui laisse passer un état de polarisation réglable $P_{det}$, ce qui permet de former les projections $P_{det}(P_{1/2}(\lambda_i))$ pour chaque composante spectrale $\lambda_i$ ainsi qu'une différence de phase additionnelle $\gamma(\lambda)$, fonction de la longueur d'onde, entre les ondes partielles des composantes spectrales, $\gamma$ étant une fonction de $P_{1/2}(\lambda)$ et $P_{det}$.

2. Interféromètre selon la revendication 1, **caractérisé en ce que**
   des éléments optiques (11, 12) sont placés dans les deux bras d'interféromètre (6, 7).

3. Interféromètre selon la revendication 1 ou 2, **caractérisé en ce que**
   le dédoubleur de faisceau (3) est un dédoubleur de faisceau polarisant qui, outre sa fonction de dédoubleur de faisceau, fonctionne comme polarisateur (8).

4. Interféromètre selon l'une des revendications 1 à 3, **caractérisé en ce que**
   les éléments optiques codant la polarisation (11, 12) sont des disques à réfraction double, des disques optiques actifs ou des disques elliptiques à réfraction double, par exemple des disques cristallins.

5. Interféromètre selon la revendication 4, **caractérisé en ce que**
   les éléments optiques codant la polarisation (11, 12) sont orientés de façon différente dans les deux bras d'interféromètre afin de transformer la lumière polarisée en différents états de polarisation $P_1(\lambda)$ ou $P_2(\lambda)$ qui, à cause de la dépendance, de la longueur d'onde, de la réfraction double, de l'activité optique ou de la réfraction double elliptique $\lambda p$ sont fonction de la longueur d'onde.

6. Interféromètre selon la revendication 2, **caractérisé en ce que**
   les éléments optiques codant la polarisation (11, 12) sont chacun un autre interféromètre à deux rayons.

7. Interféromètre selon la revendication 2, **caractérisé en ce que**
   les éléments optiques codant la polarisation (11, 12) sont des panneaux de verre ou en matière plastique anisotropes et transparents dans la gamme des longueurs d'ondes utilisées.

8. Interféromètre selon l'une des revendications 1 à 7, **caractérisé en ce que**
   $P_{1/2}{}^0$, $P_{1/2}(\lambda)$ et $P_{det}$, par la position relative du polarisateur (8) et de l'analyseur (9) ainsi que par le choix et l'orientation des éléments optiques codant la polarisation (11, 12) sont retenus de façon telle que la différence de phase additionnelle $\gamma(\lambda)$ compense la phase d'interféromètre $\Delta\varphi = 2\pi\frac{\Delta(l\cdot n)}{\lambda}$ pour une différence de parcours optique fixe $\Delta(l\text{-}n)$, de sorte que l'intensité de sortie de l'interféromètre dans une bande de longueur d'onde $\Delta\lambda$ autour d'une longueur d'onde de base $\lambda_0$ soit presque indépendante de la longueur d'onde et donc insensible aux variations spectrales de la source lumineuse.

9. Interféromètre selon l'une des revendications 1 à 7, **caractérisé en ce que**
   $P_{1/2}{}^0$, $P_{1/2}(\lambda)$ et $P_{det}$, par la position relative du polarisateur (8) et de l'analyseur (9) ainsi que par le choix et l'orientation des éléments optiques codant la polarisation (11, 12) sont retenus de façon telle que la différence de phase additionnelle ?($\lambda$) dipasse de loin la phase d'interféromètre $\Delta\varphi = 2\pi\frac{\Delta(l\cdot n)}{\lambda}$, modifiant toute la phase d'interféromètre $\Delta\varphi + \gamma(\lambda)$ de sorte que la dépendance, de la longueur d'onde, du signal de sortie de l'interféromètre dans une bande de longueur d'onde $\Delta\lambda$ autour d'une longueur d'onde de base $\Delta\lambda$ soit augmentée.

10. Interféromètre selon l'une des revendications 8 ou 9, **caractérisé en ce que**
la zone de travail spectrale $\lambda_0$, $\Delta\lambda$ de l'appareil peut être modifiée par changement de la position du polarisateur, à savoir de l'état de polarisation $P_{1/2}^0$ et/ou par changement de la position de l'analyseur, à savoir de la polarisation de détection $P_{det}$ et/ou par désajustement, basculement et/ou par changement de l'épaisseur et/ou par changement de l'orientation des plaques de retard dans l'un ou les deux bras d'interféromètre, donc par changement de $P_{1/2}(\lambda)$.

11. Interféromètre selon l'une des revendications précédentes, **caractérisé en ce que**
l'analyseur (9) placé à la sortie de l'interféromètre est un dédoubleur de faisceau polarisant pivotant.

12. Procédé utilisant un interféromètre selon l'une des revendications 1 à 11, **caractérisé en ce que**
la compensation de la dispersion ou de la dépendance de la longueur d'onde de l'intensité de sortie autour d'une longueur d'onde de base $\lambda_0$, c'est-à-dire la stabilisation du signal à la sortie de l'interféromètre en cas de variations spectrales de la longueur d'onde de $\lambda_0$ et donc une augmentation de la sensibilité de l'interféromètre en ce qui concerne les changements de la différence de longueur de bras $\Delta l$ sont obtenues par les pas suivants:

a) réalisation d'une polarisation de sortie $P_{1/2}^0$ définie, non fonction de la longueur d'onde, des ondes partielles électromagnétiques entrant dans le bras d'interféromètre, $P_1^0 \neq P_2^0$ étant possible:
b) codage des différentes composantes spectrales des ondes partielles électromagnétiques avec une polarisation $P_1(\lambda)$ ou $P_2(\lambda)$ fonction de la longueur d'onde;
c) détection d'une polarisation définie $P_{det}$;
d) accord des polarisations $P_{1/2}^0$, $P_{1/2}^0(\lambda)$ et $P_{det}$ l'une à l'autre, de sorte que, pour les longueurs d'onde $\lambda$ dans la zone de $\lambda_0$, soit:

$$\gamma(\lambda) = -\frac{1}{2}\Omega(P_{det},P_1(\lambda),P_2(\lambda)) \approx d + 2\pi\frac{\Delta ln}{\lambda_0^2}(\lambda-\lambda_0),$$

ou

$$\frac{d\Omega}{d\lambda}(\lambda_0) \approx -4\pi\frac{\Delta ln}{\lambda_0^2}$$

où d est une constante et $\Omega(P_{det}, P_1(\lambda), P_2(\lambda))$ est la surface du triangle sphérique qui, pour une $\lambda$ fixe, est défini par les points $P_{det}$, $P_1(\lambda)$ et $P_2(\lambda)$ dans la représentation des polarisations sur la boule unité de Poincaré.

13. Procédé utilisant un interféromètre selon l'une des revendications 1 à 11, **caractérisé en ce qu'**une augmentation de la résolution spectrale de l'interféromètre autour d'une longueur d'onde de base $\lambda_0$ est obtenue par les pas suivants:

a) réalisation d'une polarisation de sortie $P_{1/2}^0$ définie, non fonction de la longueur d'onde, des ondes partielles électromagnétiques entrant dans les bras d'interféromètre, $P_1^0 \neq P_2^0$ étant possible;
b) codage des différentes composantes spectrales des ondes partielles électromagnétiques avec une polarisation $P_1(\lambda)$ ou $P_2(\lambda)$, fonction de la longueur d'onde;
c) détection d'une polarisation définie $P_{det}$.
d) accord des polarisations $P_{1/2}^0$, $P_{1/2}^0(\lambda)$ et $P_{det}$ l'une à l'autre, de sorte que pour $\lambda_0$, soit $\Delta\varphi(\lambda_0) << \frac{1}{2}\Omega(P_{det}, P_1(\lambda_0), P_2(\lambda_0))$, où $\Omega(P_{det}, P_1(\lambda_0), P_2(\lambda_0))$ est la surface du triangle sphérique défini par les points $P_{det}$, $P_1(\lambda_0)$ et $P_2(\lambda_0)$ dans la représentation des polarisations sur la boule unité de Poincaré.

**Fig. 1**

Fig. 2

Fig. 3a

Fig. 3b

Fig. 3c

Fig. 4

Fig. 5